# EUROPEAN PATENT APPLICATION

(11) **EP 1 544 787 A1**
(43) Date of publication of application: **22.06.2005**
(21) Application number: 04292029.8
(22) Date of filing: 11.08.2004
(51) Int. Cl.: G06K 19/077

(54) **Contactless card including an antenna switch**

(30) Priority: 19.12.2003 EP 03293265
(71) Applicant: Axalto SA, 92120 Montrouge (FR)
(72) Inventor: Reignoux, Yves c/o Axalto SA, 92120 Montrouge (FR); Cheramy, Séverine c/o Axalto SA, 92120 Montrouge (FR); Groeninck, Denis c/o Axalto SA, 92120 Montrouge (FR); Nerot, Dorothée c/o Axalto SA, 92120 Montrouge (FR); Deloche, Manuel c/o Axalto SA, 92120 Montrouge (FR); Janot, Aurélie c/o Axalto SA, 92120 Montrouge (FR); Vere, Denis c/o Axalto SA, 92120 Montrouge (FR)

(57) **Abstract**

The invention concerns a portable object, such as a chipcard, capable of contactless communication with a reader located in the neighbourhood of said object, the object comprising an integrated circuit, an antenna (11) having first (11a) and second (11b) pads, and an object body (10). The invention is characterised in that said object further comprises a switch (17) operable by an object holder and in that, in a switched-on position of the switch, the first and second pads (11a,11b) of the antenna are electrically connected and the contactless communication with the reader is enabled whereas, in a switched-off position of the switch, the first and second pads (11a,11b) of the antenna are electrically disconnected and the contactless communication with said reader is disabled. The invention relates more particularly to contactless or dual-interface cards.

## Description

The invention relates to portable objects capable of contactless communication with a reader located in their neighbourhood. More particularly, it relates to chip cards having contactless capabilities such as pure contacless and dual interface cards.

Pure contactless and dual interface cards are widespread all around the world. Their communication range with the reader is comprised between a few millimetres to nearly one meter. Practically, the communication with the reader may occur as soon as the card is placed in the reader neighborhood, even without any voluntary intention of the card holder.

This is not acceptable when the communication with the reader involves an electronic transaction, especially a bank transaction. In such cases, the card holder should be able to have full control on the execution of said transaction.

Accordingly, a need exists for a portable object having contacless capabilities and including means allowing control, by the card holder, of the contactless transactions that may occur during a wireless communication with a reader.

In accordance with a one aspect, the invention concerns a portable object capable of contactless communication with a reader located in the neighbourhood of said object, the object comprising an integrated circuit, an antenna having first and second pads, and an object body, characterised in that said object further comprises a switch operable by an object holder and in that, in a switched-on position of the switch, the first and second pads of the antenna are electrically connected and the contactless communication with the reader is enabled whereas, in a switched-off position of the switch, the first and second pads of the antenna are electrically disconnected and the contactless communication with said reader is disabled.

When the object is in the neighborhood of a reader, the contact pads of the antenna are normally not electrically connected so that the contactless communication with the reader and, therefore, the transaction that should occur during said communication, is not possible. The object holder has then full control on the execution of the transaction. If he decides to allow a contactless transaction to occur, he simply actuates the switch.

Other features and aspects of the invention will be apparent from the following description and the accompanying drawings, in which:
Fig. 1 is a cross-sectional view of a switch of a contactless card according to a first embodiment of the invention;
Fig. 2 is a cross-sectional view of a switch of a contactless card according to a second embodiment of the invention;
Fig. 3 is a cross-sectional view of a switch of a contactless card according to a third embodiment of the invention;
Fig. 4 is a cross-sectional view of a switch of a contactless card according to a fourth embodiment of the invention;
Fig. 5 is a cross-sectional view of a switch of a contactless card according to a fifth embodiment of the invention;
Fig. 6 is a cross-sectional view of a switch of a contactless card according to a sixth embodiment of the invention;
Fig. 7 is a cross-sectional view of a switch of a contactless card according to a seventh embodiment of the invention;
Fig. 8 is a cross-sectional view of a switch of a contactless card according to a eighth embodiment of the invention;
Fig. 9A and Fig. 9B are, respectively, cross-sectional and plan views of a switch of a contactless card according to a ninth embodiment the invention; and
Figs. 10A and 10B are sectional views of a switch according to a tenth embodiment of the invention.

The present description refers specifically to contacless cards, which constitute standardized objects disclosed in the ISO standards and, more particularly, in the ISO 14443 standard.

Such cards comprise a card body and include at least an integrated circuit and an antenna embedded in said card body.

In most cases, the card body comprises a plurality of plastic sheets, or an inlet made of various plastic sheets, and two overlays. The dimensions of the card body are standardized. According to the ISO 14443 standard, part 1, which refers to the ISO 7810 standard, they are of 85.6 mm length, 54 mm wide and 0.76 mm thickness.

The integrated circuit may be incorporated within an electronic module, affixed to a leadframe layer of said module. It is bonded to conductors of the leadframe and embedded into a protecting resin.

The antenna may be made by serigraphy, by etching or simply be made of an antenna coil incorporated into the inlet. The terminal ends of the antenna are electrically connected to the integrated circuit or, when said integrated circuit is incorporated within an electronic module, to leadframe conductors of said module.

In accordance with the invention, the contacless card further comprises a switch operable by the card holder. In a switched-on position, first and second pads of the antenna are electrically connected so that the wireless communication of the card with a reader located in the neighborhood of said card is enabled. In a switched-off position, first and second pads of the antenna are electrically disconnected so that the wireless communication with such a reader is disabled.

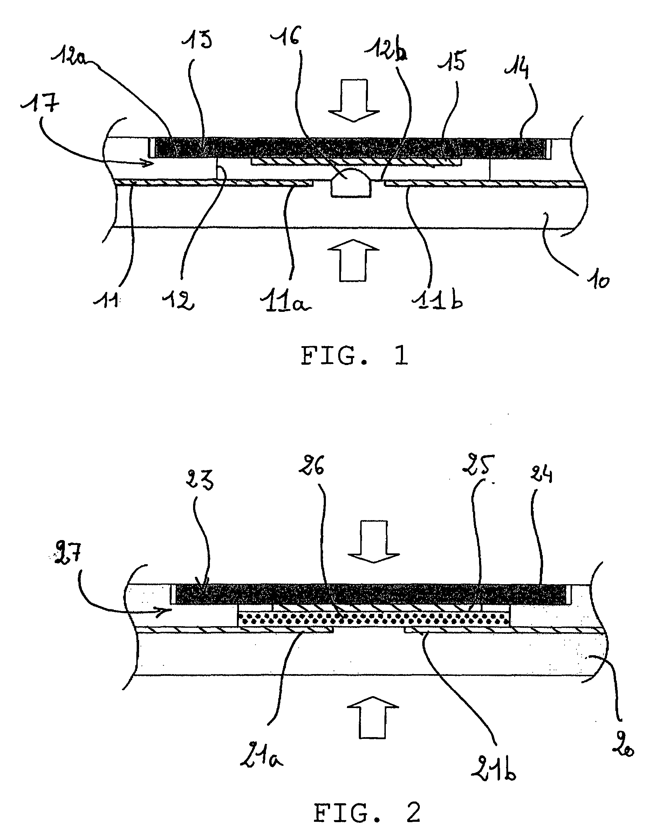

Figs. 1, 2, 3, 4 and 5 illustrate cards embodiments wherein the switch comprises a module so that it may be manufactured in a similar way as regular electronic modules. As a result, the switches are advantageously embedded into a contactless card using classical integrated circuit module embedding processes. Hence, the manufacture of the contactless cards according to these embodiments of the invention appears particularly easy and does not necessitate any significant changes in the card production lines.

Referring first to Fig. 1, the card comprises a card body 10 including a plurality of plastic sheets. The antenna 11 is embedded within said card body 10 and a cavity 12 is made on one side of it. The depth of this cavity 12 is approximately equal to half of the thickness of the card body 10. The antenna 11 includes two antenna pads 11a, 11b located at the bottom of the cavity 12. A module 13 is incorporated in the cavity 12. Said module 13 comprises a leadframe layer 14 and a conductive layer 15. The leadframe layer 14 is laid on a shoulder 12a of the cavity 12 and closes said cavity 12. The conductive layer 15 is bonded to the leadframe 14, facing the bottom of the cavity 12. A resilient material 16 having, for example, shape memory properties, protrudes the cavity bottom 12b, approximately centrally, in between the two antenna pads 11a, 11b. Then, in this embodiment, the switch 17 includes the module 13, the antenna pads 11a, 11b, the resilient material 16, all of these being incorporated in the cavity 12 of the card body 10.

When the card holder applies some local pressure to the switch 17, as indicated by the arrows on Fig. 1, the leadframe 13 and, to a minor extent, the card body part of the cavity bottom 12b deform locally, within the cavity 12. The resilient material 16 is compressed and the conductive layer 15 then contacts the antenna pads 11a, 11b. If a reader is located in the vicinity of the card, a wireless communication may occur and an electronic transaction may execute. When the card holder loosens local pressure, the leadframe 14 recovers its initial position with the help of the resilient material 16. Electrical contact in between the antenna pads 11a, 11b is cut. Contactless communication with the reader is disabled. Thus, the electrical connection occurs only if required by the card holder.

As for the switch 17 of Fig. 1, the switch 27 illustrated in Fig. 2 includes a module 23, said module comprising a leadframe layer 24 and a conductive layer 25, and further includes a resilient material 26 and two antenna pads 21a, 21b. However, in this embodiment, the resilient material 26 is made of an isotropic conductive material layer integral with the conductive layer 25 enabling an electrical conduction along the vertical axis Z when compressed.

When the card holder applies some local pressure to the switch 27, as indicated by the arrows, electrical contact between the antenna pads 21a, 21b is enabled through the anisotropic conductive material 26 (along the vertical axis) and the conductive layer 25 (along the horizontal axis) and contacless transactions may occur. When the card holder loosens local pressure, the anisotropic conductive material 26 does not allow anymore electrical conduction along the Z-axis and contactless communication is disabled.

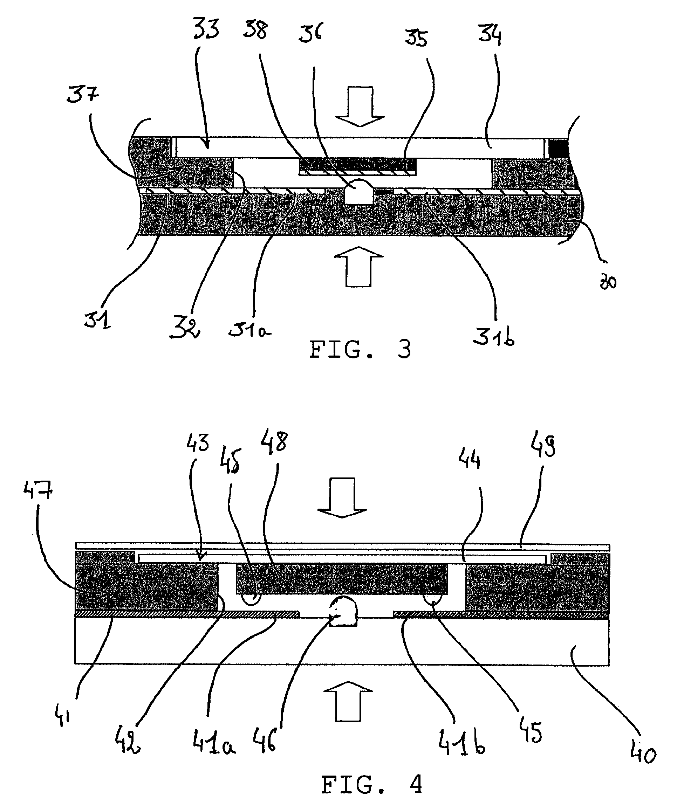

As for the switches 17, 27 of Figs. 1 and 2, the switch 37 of Fig. 3 includes a module 33, two antenna pads 31a, 31b located at the bottom of a cavity 32, a resilient material 36 protruding in between said pads 31a, 31b. However, in this embodiment, the conductive layer 35 is bonded onto a resin coating 38 possibly incorporating an integrated circuit. If such an integrated circuit is incorporated, the module 33 is functional.

When the card holder applies some local pressure to the switch 37, as indicated by the arrows, the leadframe layer 34 deforms within the cavity 32 and compresses the resilient material 36. The conductive layer 38 then contacts the antenna pads 31a, 31b and the contactless communication with the reader is enabled. When the card holder loosens local pressure, the switch 37 recovers its initial position with the help of the resilient material 36.

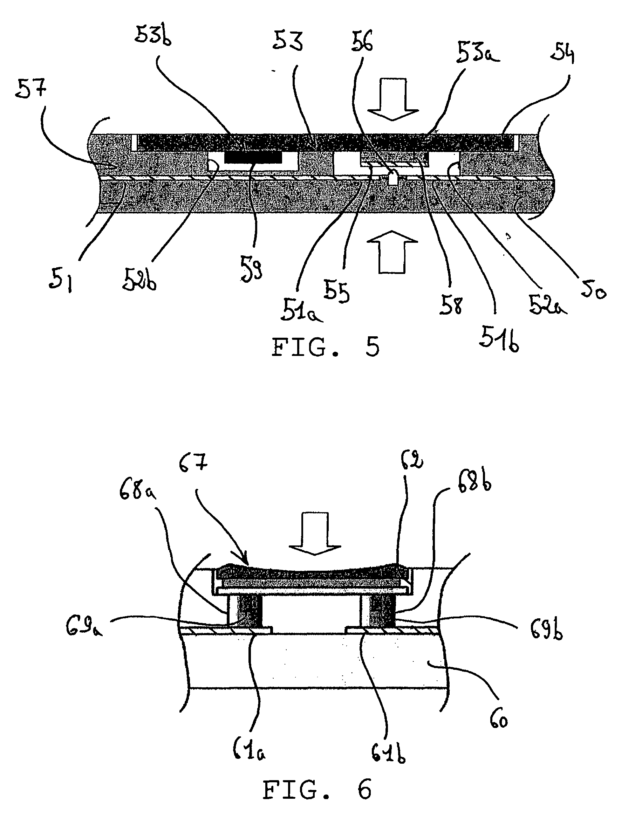

In the embodiment of Fig. 4, the switch 47 comprises a module 43, a resilient material 46 and two antenna pads 41a, 41b located at the bottom a cavity 42 made in the card body 40. The module 43 includes a functional integrated circuit 48 or chip and a substrate layer 44. The integrated circuit 48 is glued on the substrate layer 44. It is relatively thick and is provided with bumps 45 that can be hard or flexible. The thickness of the integrated circuit depends on the position of the antenna inside the card, and on the thickness of the bumps. The substrate 44 is made of plastic and is flexible. A patch or an overlay 49 is advantageously bonded to the finished card in order to protect the switch 47. It may cover the local surface of the switch 47 or may cover the entire card surface. It may be personalized using, for example, laser technology.

Also, to prevent corrosion of the antenna pads, some conductive varnish may be added. In addition, preventing the corrosion of the antenna pads may be done by embedding the integrated circuit within an inert atmosphere.

If the intention of the card holder is not to proceed with a transaction, he or she does not press locally on the switch 47. The bumps 45 of the integrated circuit 48 are not electrically connected with the antenna pads 41a, 41b. As a result, the wireless communication with a reader located in the vicinity of the card is disabled. When the card holder presses locally on the switch, the substrate 44 deforms, the resilient material 46 is compressed and the bumps 45 come into contact with the antenna pads 41a, 41b. Thus, the integrated circuit 48 is electronically connected to the antenna pads 41a, 41b and contactless communication with the reader is enabled so that a contacless transaction may occur. When the card holder does not press the substrate any more, the substrate 44 becomes flat again, disconnecting the bumps 45 from the antenna pads 41a, 41b and the electronic connection is disabled. It is to be noted that this embodiment of the invention presents a perfect reliability, even after the switch is actuated thousands of times.

The switch 57 according to the embodiment of the invention shown in Fig. 5 comprises a module 53 having two functional parts: a switch part 53a and an integrated circuit part 53b. Each part is positioned in a cavity of the card body 50. Thus, there are two separate cavities, a first cavity 52a receiving the switch part 53a of the module 53 and a second cavity 52b receiving the integrated circuit part 53b of the module 53. The first cavity 52a is adjacent to the second cavity 52b. The module 53 comprises a unique leadframe layer 54 covering both cavities 52a, 52b. A non-conductive resin layer 58 and a conductive layer 55 are integral with the lower surface of the leadframe 54, in the first cavity 52a. A functional integrated circuit, embedded into resin 59, is integral with the lower surface of the leadframe 54, in the second cavity 52b. As for the embodiments of Fig. 1 and 3, the two antenna pads 51a, 51b are located at the bottom of the first cavity 52a and a resilient material 56 is protruding in between said pads. The integrated circuit is normally electrically connected to the leadframe layer 54. Leadframe conducting lines may be connected to the conductive layer 55 of the first part 53a of the module 53 or not.

When the card holder applies some local pressure to the switch 57, as indicated by the arrows, the leadframe layer 54 deforms within the first cavity and compresses the resilient material 56. The conductive layer 58 then contacts the antenna pads 51a, 51b. If the conductive layer 55 is electrically connected to the integrated circuit of the second part 53b of the module 53, the contactless communication with a reader located close by may be activated. If the conductive layer 58 is not electrically connected to the integrated circuit of the second part 53b of the module, the electrical connection of the antenna pads 51a, 51b through the conductive layer 55 activates the connection with a distant integrated circuit of the card. As for the previous embodiment, if no more pressure is applied to the switch, then, the electrical contact in between the conductive layer 55 and the antenna pads 51a, 51b is broken and contactless communication with the reader is disabled.

Figs. 6, 7, 8, 9 and 10 illustrate cards embodiments wherein the switches may be incorporated into a finished card product. As a result, the switches and the cards may be manufactured by separate companies.

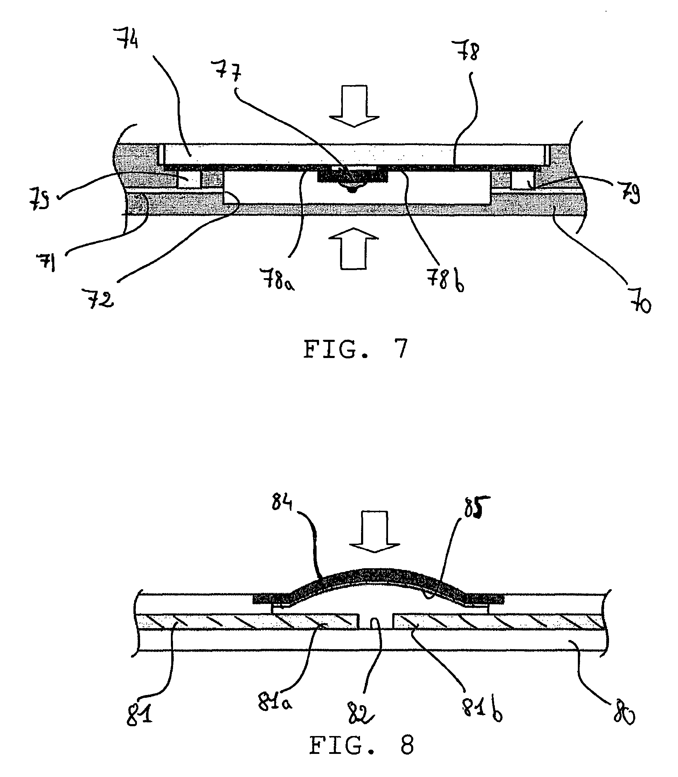

In Figs. 6 and 7, the switches, that are incorporated into the cards, are complete functional switches.

Referring first to Fig. 6, a complete switch 67 is embedded in a finished card. The card body 60 comprises an antenna 61 having two antenna pads 61a, 61b and a cavity 62. Two vias 68a, 68b, filled with a conducting resin, are interconnecting the bottom of the cavity 62 to the antenna pads 61a, 61b. The switch 67 comprises two contact terminals 69a, 69b protruding inside the top part of the via 68a, 68b. It comprises an internal mechanism which makes contact in between the contact terminals 69a, 69b, when a card user presses the upper part of the switch 67 and which does not when no pressure is applied.

Thus, when a card holder applies some pressure to the switch 67, the connection in between the antenna pads 61a, 61b is achieved and wireless communication is enabled. When no more pressure is applied, the internal mechanism disconnects the contact terminals 69a, 69b and the wireless communication is disabled.

It is noted that the connection between the switch 67 and the antenna pads 61a, 61b requires the same manufacturing techniques as those involved in dual-interface cards, i.e. by filling via with a conductive material prior to embedding a modular element. As a result, the manufacturing process of the cards according to this embodiment does not necessitate any development and implementation of new processes.

Referring now to Fig. 7, a complete miniature switch 77 is bonded onto contact terminals 78a, 78b of a conductive circuit 78 integral with a leadframe or plastic flexible layer 74 positioned at the top of a cavity 72 of the card body 70. The miniature switch comprises an internal mechanism able to ensure electrical contact between the conductive circuit terminals 78a, 78b when pressed. The whole element is embedded within a finished card presenting connection vias 79 filled with a conductive material enabling the electrical connection with the antenna 71.

When the card holder wishes to allow a contactless transaction to occur, he or she presses the layer 74 and the bottom of the cavity 72 as indicated by the arrows in Fig. 7. The miniature switch comes into contact with this cavity bottom, and electrical contact to the antenna through the vias 79 and the conductive circuit is achieved. Then, the contactless communication with a reader located close by the card is enabled.

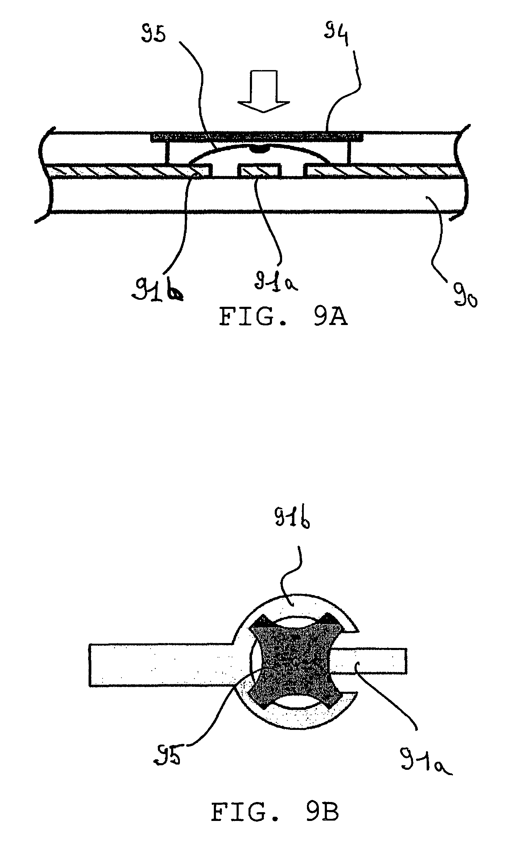

In Figs. 8, 9A and 9B, and 10A and 10B only a part of the switches is incorporated into the cards. As a result, only this particular part may be subcontracted.

In Fig. 8, the switch includes a flexible membrane 84 coated with a layer 85 of conductive material. When the membrane 84 is vertically pressed the conductive material is in contact with antenna pads 81a, 81b of the antenna 81 located at the bottom of a cavity 82 of the card body 80.

When the card holder wishes to activate contactless communication with a reader, he or she just presses the flexible membrane 84 as indicated by the arrow. Said membrane deforms within the cavity 82. When the layer 85 contacts the antenna pads 81a, 81b, the electrical connection is achieved and the contactless communication may occur. When the card holder does not press anymore the flexible membrane deforms back to its initial position and contactless communication is disabled.

In Figs. 9A and 9B, a flexible conductive hemispherical membrane 95, for example made of copper, is placed into a cavity 92 of the card body 90. The centre of this hemispherical membrane 95 is positioned nearby a thin plastic layer 94 closing the cavity 92 and above an antenna pad 91a located centrally at the cavity bottom, whereas the distal extremities of the membrane 95 are in contact with a circular antenna pad 91b surrounding the pad 91a.

When the membrane 95 is vertically pressed by the card holder, it deforms so that the central point of the membrane 95 comes in contact with the antenna pad 91a. Then, the electrical connection between the antenna pads 91a, 91b is achieved and wireless communication with a reader may occur. When pressure is released, the membrane deforms back to its initial position and there is electrical contact in between the antenna pads is disabled.

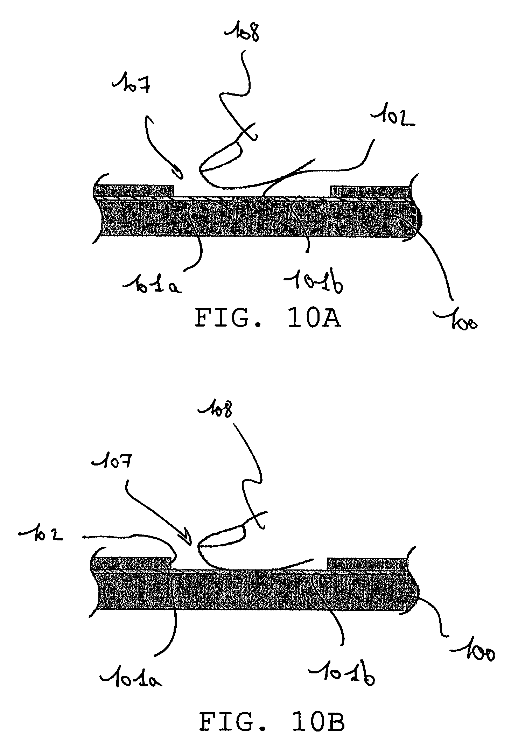

In figs. 10A and 10B, the switch 107 comprises only two antenna pads 101a, 101b located at the bottom of an open cavity 102 of the card body 100.

When the card holder applies one of his fingers 108 at the bottom of the cavity 102 (Fig. 10B), he or she closes the electrical circuit in between the pads 101a, 101b due to the natural human body conduction and contactless communication with a reader may occur. When the card holder removes his finger 108 from the bottom of the cavity 102 (Fig. 10A), the electrical circuit is open and contacless communication is disabled.

It is to be noted that the previous embodiments of the invention are non limitative and that various modifications and improvements may be made to these embodiments without departing from the scope of the present invention.

## Claims

1. A portable object capable of contactless communication with a reader located in the neighbourhood of said object, the object comprising an integrated circuit, an antenna (11, 21, 31, 41, 51, 61, 71, 81, 91, 101) having first and second pads, and an object body (10, 20, 30, 40, 50, 60, 70, 80, 90, 100), **characterised in that** said object further comprises a switch operable by an object holder and **in that**, in a switched-on position of the switch, the first and second pads of the antenna are electrically connected and the contactless communication with the reader is enabled whereas, in a switched-off position of the switch, the first and second pads of the antenna are electrically disconnected and the contactless communication with said reader is disabled.

2. The portable object of claim 1, wherein the switch comprises a module (13, 23, 33, 43, 53) incorporated in a cavity (12, 22, 32, 42, 52) of the object body.

3. The portable object of claim 2, wherein the module comprises a substrate layer (14, 24, 34, 44, 54) being able to deform elastically in the cavity.

4. The portable object of claim 3, wherein the substrate layer is a lead frame.

5. The portable object of one of claims 2 to 4, wherein the module comprises a conductive layer (15, 25, 35).

6. The portable object of one of claims 3 or 4 and claim 5, wherein the conducting layer is bonded to the substrate layer.

7. The portable object of one of claims 3 or 4 and claim 5, wherein the conductive layer is bonded to an intermediate layer, said intermediate layer being bonded to the substrate layer.

8. The portable object of claim 7, wherein the intermediate layer is made of resin.

9. The portable object of claim 8, wherein the resin incorporates the integrated circuit.

10. The portable object of one of the previous claims, wherein the switch further comprises a resilient material (16, 26, 36, 46, 56).

11. The portable object of claim 10, wherein the resilient material protrudes the cavity bottom.

12. The portable object of claim 10, wherein the resilient (26) material is made of an isotropic conductive material.

13. The portable object of one of the previous claims, wherein the modules includes an integrated circuit provided with bumps (45) that comes into contact with the antenna pads (41a, 41b).

14. The portable object of one of the previous claims, wherein the module comprises two functional parts, a switch part (53a) and an integrated part (53b) each part being positioned into a cavity (52a, 52b) of the card body (50).

15. The portable object of one of the previous claims, wherein two vias (68a, 68b) are interconnecting the bottom of the cavity (62) to contact terminals (69a, 69b) of the switch (67).

16. Contactless or dual interface card according to one of the previous claims.
